# FASCICULE DE BREVET EUROPEEN

(11) **EP 0 690 541 B1**
(45) Date de publication et mention de la délivrance du brevet: **12.09.2001**
(21) Numéro de dépôt: 95401512.9
(22) Date de dépôt: 26.06.1995
(51) Int. Cl.: H02J 9/04

(54) **Appareil électronique à deux modes d'alimentation**
Elektronisches Gerät mit zwei Stromversorgungsbetriebsarten
Electronic apparatus having two power supply modes

(30) Priorité: 28.06.1994 FR 9408049
(43) Date de publication de la demande: 03.01.1996
(73) Titulaire: THOMSON multimedia, 92648 Boulogne Cédex (FR)
(72) Inventeur: Ho, Wai Keung, F-92050 Paris la defense (FR); Mingot, Jacques, F-92050 Paris la defense (FR); Grossier, Michel, F-92050 Paris la defense (FR)
(74) Mandataire: Zhang, Jianguo

(56) Documents cités:
- EP-A- 0 077 531
- WO-A-87/02848
- DE-A- 4 106 557
- GB-A- 2 162 706
- PATENT ABSTRACTS OF JAPAN vol. 7, no. 57 (P-181) (1202) 9 Mars 1983 & JP-A-57 203 119 (MITSUBISHI DENKI K.K.) 13 Février 1982

## Description

La présente invention concerne un appareil électronique comportant deux modes d'alimentation électrique, l'alimentation de l'appareil ne devant pas être interrompue lorsque l'on passe d'un mode d'alimentation à l'autre. L'invention concerne, en particulier et comme exemple, un appareil diffusant de la musique tel qu'un radio-réveil pouvant être utilisé sur secteur d'une manière fixe, ou sur batteries d'une manière portable sans interruption du programme diffusé lorsqu'il passe d'un mode d'alimentation à l'autre.

Parmi les différents radio-réveils existants, certains sont alimentés par le secteur et sont donc statiques, d'autres sont équipés de piles électriques. Ces derniers peuvent être transportés tout en continuant à fonctionner, mais leur autonomie en énergie est limitée par la capacité des piles qui doivent être soit changées, soit rechargées.

Le document WO-A-87/02848 décrit un talkee-walkee comportant une batterie rechargeable. Dans un premier mode de fonctionnement correspondant au mode de fonctionnement normal du talkee-walkee, celui-ci est alimenté par sa batterie. Dans un deuxième mode de fonctionnement du talkee-walkee avec rechargement de batterie à l'aide d'un chargeur de batterie branché sur le secteur, le chargeur alimente alors directement le talkee-walkee. Un commutateur permet le passage d'un mode de fonctionnement à l'autre avec interruption de l'alimentation.

Le document GB-A-2 162 706 divulgue une carte à circuit imprimé dont l'alimentation n'est pas interrompue lorsqu'elle est déconnectée du module qui l'alimente. La carte à circuit imprimé comporte une batterie rechargeable.

La présente invention a pour objet un appareil électronique tel que défini dans la revendication 1 qui peut être utilisé à la fois d'une manière portable en étant alimenté électriquement sur batterie et d'une manière statique en étant alimenté électriquement par le secteur, et qui peut fonctionner sans interruption lorsque l'on passe d'un mode d'alimentation (par exemple par le secteur) à l'autre mode d'alimentation (par exemple par la batterie).

De préférence, une première diode est associée à l'alimentation électrique du circuit électronique par le secteur. De même, une seconde diode est associée à l'alimentation électrique du circuit électronique par batterie.

Avantageusement, la tension redressée délivrée par le support présente une valeur supérieure à celle de la batterie de la partie mobile. Ainsi, la seconde diode est bloquée lorsque la partie mobile est posée en contact électrique avec le support pour protéger la batterie contre un courant de retour.

L'invention propose une technique simple, attrayante à l'utilisateur et peu coûteuse. Dans le cas d'un radio réveil par exemple, l'utilisateur peut, après son réveil, emporter la partie mobile de son appareil où se trouve le circuit électronique du radio réveil, de la chambre à coucher à la salle de bain, sans interrompre l'émission qu'il est en train d'écouter, ni l'heure affichée sur son appareil, ce qui lui permet, dans sa salle de bain, non seulement de continuer à écouter son émission radio sans perdre d'information, mais également de continuer à surveiller l'heure pour ne pas être en retard.

L'invention sera mieux comprise et des avantages supplémentaires apparaîtront à la lecture de la description d'un mode de réalisation pris à titre d'exemple nullement limitatif et illustré par les figures suivantes :
- la figure **1** représente l'aspect général d'un appareil électronique selon l'invention, et
- la figure **2** représente un schéma électrique des systèmes d'alimentation électrique de l'appareil de la figure **1**.

Dans le mode de réalisation décrit, l'invention est appliquée à un "radio-réveil" - c'est-à-dire un appareil récepteur de musique et d'informations permettant notamment le réveil programmé en musique mais peut être étendue à tous les types d'appareils électroniques audio et vidéo, en particulier les lecteurs de disque optique, les radios, les lecteurs de cassette, les écrans moniteurs en cristaux liquides pour la télévision ou le visiophone, etc.

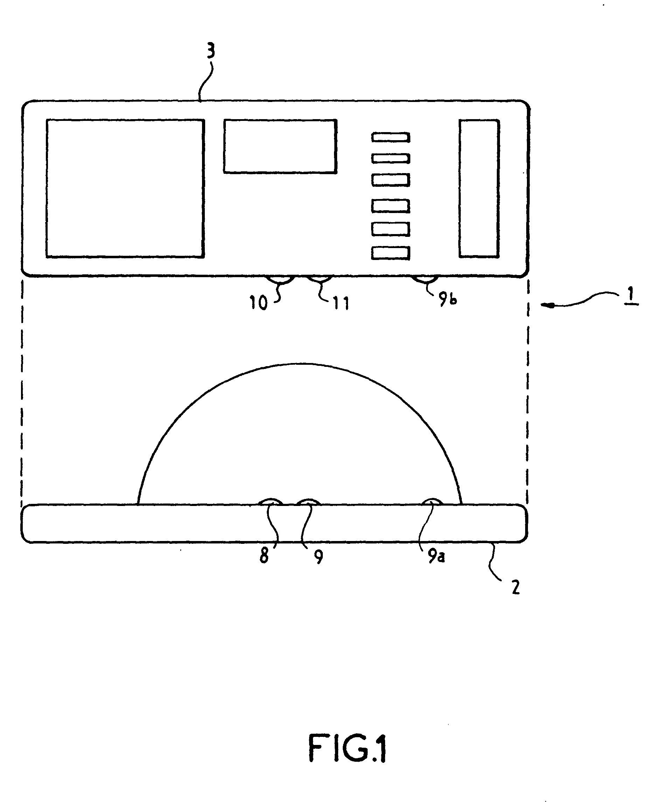

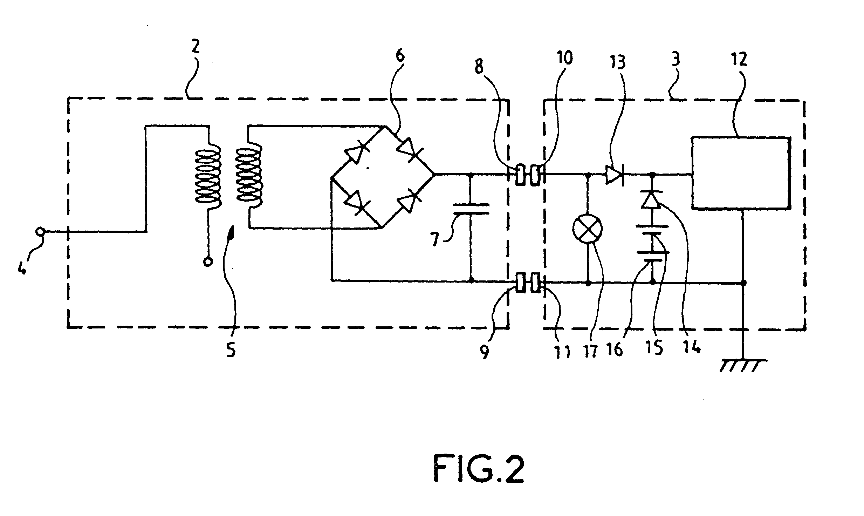

Comme illustré sur la figure **1** et **2**, le radio-réveil **1** est composé de deux parties, la partie **2** constituant la base ou le support de l'appareil et la partie **3** constituant sa partie mobile.

La partie **2**, support de l'appareil, comporte un dispositif d'alimentation sur secteur comme représenté sur la figure **2**. Ce dispositif est constitué d'une entrée **4** reliée au secteur non représenté qui délivre un courant alternatif (par exemple de 50 hertz et 230 volts), un transformateur **5** permettant d'obtenir une tension plus basse (par exemple **10** volts) qui va être redressée d'une manière classique par un pont redresseur **6** (par exemple un pont à diodes) et une capacité **7** reliant les deux sorties du pont redresseur. Selon une caractéristique importante de la présente invention, ces sorties sont constituées de contacts métalliques conducteurs électriques **8** et **9**. Ces contacts peuvent être des plots sphériques dépassant légèrement de la surface du support (voir figure **1**). Un troisième contact **9a** (voir figure **1**), du même type que les contacts électriques **8** et **9**, peut être connecté à une antenne (non représentée) solidaire du support **2** afin d'améliorer les caractéristiques de fonctionnement de l'appareil lorsque sa partie mobile **3** est posée sur son support, le contact **9a** d'antenne du support étant alors relié à un contact **9b** de la partie mobile (voir figure **1**).

Selon une autre caractéristique importante de la présente invention, la partie mobile **3** comporte deux contacts électriques **10** et **11** - qui peuvent être, par exemple, deux lamelles ressorts en bronze/phosphore - qui viennent en contact respectivement avec les plots **8** et **9** du support **2** lorsque la partie mobile **3** est posée sur son support **2**. La partie mobile **3** du radio-réveil comporte un circuit électronique **12** assurant les fonctions classiques des radio-réveils, c'est à dire l'affichage de l'heure, les fréquences sélectionnées, ainsi que tous les boutons de réglage nécessaires à leurs fonctionnements. Le circuit électronique **12** est connecté aux contacts **10** et **11** via une diode **13**. En parallèle à ces deux entrées d'alimentation **10** et **11** et en aval de la diode **13**, sont connectées (la ou) les batteries **15** et **16** commandées par une diode **14**. Pour un meilleur fonctionnement de l'appareil, des capacités peuvent être ajoutées en parallèle aux diodes du pont redresseur **6**, et/ou en avant de la diode **13** reliant les deux contacts **10** et **11**.

Un moyen d'éclairage **17** sous forme d'une ampoule, par exemple, peut être monté entre les bornes métalliques **10** et **11** de contact électrique pour éclairer, par exemple, l'écran en cristaux liquides du radio-réveil indiquant l'heure (ce qui est très utile pendant la nuit) lorsque la partie mobile **3** est posée sur le support **2**, et ne pas éclairer cet écran lorsque la partie mobile est enlevée du support pour minimiser la consommation de la batterie **15**, **16**.

Le contact antenne **9b** de la partie mobile **3** du radio réveil **1** peut venir se connecter sur le contact-antenne correspondant **9a** du support. Cette antenne non représentée peut être une antenne enroulée sur le cordon d'alimentation. D'autres contacts peuvent être prévus pour d'autres fonctions afin d'améliorer les caractéristiques de fonctionnement du circuit électronique **12** lorsque la partie mobile de l'appareil est posée sur son support.

Le radio-réveil 1 fonctionne à la manière ci-après. Lorsque la partie mobile **3** est posée ou fixée sur son support **2**, les deux parties sont en contact électrique, et la tension redressée délivrée par le support est de (par exemple) **10** volts. Cette tension est supérieure à celle délivrée par les batteries **15** et **16** qui peut être par exemple de **3x1,5v**. Ainsi la diode **13** est passante et la diode **14** est bloquée, cela empêchant un courant de retour vers les batteries **15** et **16**. Lorsque la partie mobile **3** est retirée de son support **2**, elle n'est plus en contact électrique Via ce support avec l'alimentation fournie par le secteur, et c'est la diode **14** qui devient passante et permet l'alimentation du circuit électronique **12** de la partie mobile **3**. De cette façon, lorsque cette partie mobile **3** du radio réveil est désolidarisée de son support **2**, elle devient autonome grâce à l'alimentation de ses batteries **15**, **16**. Ces batteries peuvent être des piles électriques non rechargeables ou peuvent, grâce à un dispositif classique, se recharger sur le secteur lorsque la partie mobile est posée sur le support, cela permettant encore une meilleure autonomie énergétique de la partie mobile de l'appareil.

Grâce à l'invention, l'utilisateur ne constate aucun parasite lors du changement d'alimentation de l'appareil. Il peut ainsi se réveiller et se promener avec la partie mobile de son radio-réveil dans différentes pièces, sans aucune interruption ou aucun parasite du programme sélectionné.

Par ailleurs, le support peut être muni d'un haut-parleur et/ou d'une électronique de radio semblable à celle équipant la partie mobile, ou encore de tout autre dispositif.

## Revendications

1. Appareil électronique (1), notamment radio-réveil, radio, lecteur de disque optique ou de cassette, ou écran moniteur vidéo en cristaux liquides, comprenant un support (2) destiné à être branché sur l'alimentation électrique du secteur et une partie mobile (3) pouvant être en contact électrique avec le support et comportant au moins un circuit électronique (12) pouvant être alimenté électriquement selon deux modes d'alimentation,
- le support (2) étant agencé pour, selon l'un des modes d'alimentation, alimenter par une tension redressée le circuit électronique lorsque le support est branché sur le secteur et que la partie mobile (3) est posée en contact électrique avec le support,
- la partie mobile (3) comportant au moins une batterie électrique agencée pour, selon l'autre mode d'alimentation, alimenter le circuit électronique lorsque la partie mobile n'est plus en contact électrique avec le support,
- l'alimentation du circuit électronique (12) n'étant pas interrompue lors du passage d'un mode d'alimentation à l'autre de façon à assurer la continuité de fonctionnement du circuit électronique lorsque la partie mobile est enlevée du support ou lorsqu'elle est posée sur le support.

2. Appareil électronique selon la revendication **1**, **caractérisé en ce qu'**il comprend une première diode (**13**) pour assurer l'alimentation électrique du circuit électronique (**12**) par la tension redressée du support et une seconde diode (**14**) pour assurer l'alimentation électrique du circuit électronique par la batterie (**15, 16**) de la partie mobile.

3. Appareil électronique selon la revendication **2**, **caractérisé en ce que** le support (**2**) est agencé pour délivrer une tension électrique redressée supérieure à celle de la batterie (**15,16**), de façon à bloquer la seconde diode (**14**) pendant que le circuit électronique (**12**) est alimenté par le support.

4. Appareil électronique selon la revendication **2** ou **3**, **caractérisé en ce que** les première et seconde diodes (**13, 14**) font partie de la partie mobile (**3**).

5. Appareil électronique selon la revendication **4**, **caractérisé en ce que** la partie mobile (**3**) comprend en outre un moyen d'éclairage (**17**) monté entre deux bornes métalliques (**10, 11**) de contact électrique avec le support (**2**).

6. Appareil électronique selon l'une quelconque des revendications précédentes, **caractérisé en ce que** le support (2) comporte un système d'antenne avec lequel le circuit électronique (12) peut être mis en contact (9a, 9b) lorsque la partie mobile (3) est posée sur son support.

7. Appareil électronique selon l'une quelconque des revendications précédentes, **caractérisé en ce que** le circuit électronique (12) est associé à au moins l'un des éléments suivants : écran moniteur vidéo en cristaux liquides, lecteur de disque optique ou de cassette, radio, radio-réveil.

8. Appareil électronique selon l'une quelconque des revendications précédentes, **caractérisé en ce que** la batterie (15, 16) se recharge électriquement sur le secteur lorsque la partie mobile (3) est posée en contact électrique avec son support (2).

9. Appareil électronique selon l'une quelconque des revendications précédentes, dans lequel un moyen d'éclairage (17) éclaire lorsque la partie mobile (3) est posée sur le support (2) et n'éclaire pas lorsque la partie mobile (3) est enlevée du support (2).

## Claims

1. Electronic apparatus (1), in particular clock radio, radio, optical disc or cassette player, or liquid crystal video monitor screen, comprising a support (2) intended to be plugged into the mains electrical supply and a moveable part (3) which can be in electrical contact with the support and comprises at least one electronic circuit (12) able to be supplied electrically according to two modes of supply,
- the support (2) being designed in order, according to one of the supply modes, to supply the electronic circuit via a rectified voltage when the support is plugged into the mains and when the moveable part (3) is placed in electrical contact with the support,
- the moveable part (3) comprising at least one electric battery designed so as, according to the other supply mode, to supply the electronic circuit when the moveable part is no longer in electrical contact with the support,
- the supply to the electronic circuit (12) not being interrupted during the switch from one supply mode to the other so as to ensure the continuity of operation of the electronic circuit when the moveable part is removed from the support or when it is placed on the support.

2. Electronic apparatus according to Claim 1, **characterized in that** it comprises a first diode (13) for ensuring the electrical supply to the electronic circuit (12) via the rectified voltage of the support and a second diode (14) for ensuring the electrical supply to the electronic circuit via the battery (15, 16) of the moveable part.

3. Electronic apparatus according to Claim 2, **characterized in that** the support (2) is designed so as to deliver a rectified electrical voltage greater than that of the battery (15, 16), in such a way as to turn off the second diode (14) while the electronic circuit (12) is supplied via the support.

4. Electronic apparatus according to Claim 2 or 3, **characterized in that** the first and second diodes (13, 14) form part of the moveable part (3).

5. Electronic apparatus according to Claim 4, **characterized in that** the moveable part (3) furthermore comprises a means of lighting (17) mounted between two metal terminals (10, 11) for electrical contact with the support (2).

6. Electronic apparatus according to any one of the preceding claims, **characterized in that** the support (2) comprises an antenna system with which the electronic circuit (12) may be placed in contact (9a, 9b) when the moveable part (3) is placed on its support.

7. Electronic apparatus according to any one of the preceding claims, **characterized in that** the electronic circuit (12) is associated with at least one of the following elements: liquid crystal video monitor screen, optical disc or cassette player, radio, clock radio.

8. Electronic apparatus according to any one of the preceding claims, **characterized in that** the battery (15, 16) recharges electrically from the mains when the moveable part (3) is placed in electrical contact with its support (2).

9. Electronic apparatus according to any one of the preceding claims, in which a lighting means (17) lights up when the moveable part (3) is placed on the support (2) and does not light up when the moveable part (3) is removed from the support (2).

## Patentansprüche

1. Elektronisches Gerät (1), insbesondere Radiowecker, Radio, CD-Spieler, Kassettenspieler oder Monitor mit einem Flüssigkristallschirm, mit einem Grundteil (2) zur elektrischen Stromversorgung aus dem Stromnetz und einem mobilen Teil (3), das mit dem Grundteil in elektrischen Kontakt gelangen kann und wenigstens eine elektronische Schaltung (12) enthält, die gemäß zwei Versorgungs-Modi elektrisch gespeist werden kann,
- wobei das Grundteil (2) die elektronische Schaltung gemäß einem der Versorgungsmodi mit einer gleichgerichteten Spannung versorgt, wenn das Grundteil an das Netz angeschlossen ist und das mobile Teil (3) sich in elektrischem Kontakt mit dem Grundteil befindet,
- das mobile Teil (3) wenigstens eine Batterie enthält, um die elektronische Schaltung gemäß dem anderen Versorgungsmodus zu versorgen, wenn das mobile Teil sich nicht mehr in elektrischem Kontakt mit dem Grundteil befindet,
- die Stromversorgung der elektronischen Schaltung (12) bei dem Übergang von einem Versorgungsmodus zu dem anderem nicht unterbrochen wird, so daß ein ununterbrochener Betrieb der elektronischen Schaltung gewährleistet ist, wenn das mobile Teil von dem Grundteil abgenommen oder auf das Grundteil aufgesetzt wird.

2. Elektronisches Gerät nach Anspruch 1, **dadurch gekennzeichnet, daß** es eine erste Diode (13) für die elektrische Versorgung der elektronischen Schaltung (12) durch die gleichgerichtete Netzspannung und eine zweite Diode (14) zur elektrischen Versorgung der elektronischen Schaltung durch die Batterie (15, 16) des mobilen Teils enthält.

3. Elektronisches Gerät nach Anspruch 2, **dadurch gekennzeichnet, daß** das Grundteil (2) eine gleichgerichtete elektrische Spannung liefert, die größer ist als die der Batterie (15, 16), so daß die zweite Diode (14) gesperrt ist, während die elektronische Schaltung (12) durch das Grundteil versorgt wird.

4. Elektronisches Gerät nach Anspruch 2 oder 3, **dadurch gekennzeichnet, daß** die erste und die zweite Diode (13, 14) Teil des mobilen Teils (3) bilden.

5. Elektronisches Gerät nach Anspruch 4, **dadurch gekennzeichnet, daß** das mobile Teil (3) außerdem ein Beleuchtungsmittel (17) enthält, das zwischen den metallischen Kontakten (10, 11) in elektrischem Kontakt mit dem Grundteil (2) steht.

6. Elektronisches Gerät nach einem der vorangehenden Ansprüche, **dadurch gekennzeichnet, daß** das Grundteil (2) ein Antennensystem enthält, mit dem die elektronische Schaltung (12) in Kontakt (9a, 9b) gelangen kann, wenn sich das mobile Teil (3) auf dem Grundteil befindet.

7. Elektronisches Gerät nach einem der vorangehenden Ansprüche, **dadurch gekennzeichnet, daß** die elektronische Schaltung (12) wenigstens zu einem der folgenden Bauteile gehört: Videomonitor mit einem Flüssigkristallschirm, CD-Spieler oder Kassettenspieler, Radio, Radiowecker.

8. Elektronisches Gerät nach einem der vorangehenden Ansprüche, **dadurch gekennzeichnet, daß die Batterie** (15, 16) durch das Stromnetz elektrisch nachgeladen wird, wenn sich das mobile Teil (3) in elektrischem Kontakt mit dem Grundteil (2) befindet.

9. Elektronisches Gerät nach einem der vorangehenden Ansprüche, in dem ein Beleuchtungsmittel (17) leuchtet, wenn das mobile Teil (3) auf dem Grundteil (2) abgestellt ist, und nicht leuchtet, wenn das mobile Teil (3) von dem Grundteil (2) abgenommen ist.
